# EUROPÄISCHE PATENTSCHRIFT

(11) **EP 0 304 652 B1**
(45) Veröffentlichungstag und Bekanntmachung des Hinweises auf die Patenterteilung: **01.12.1993**
(21) Anmeldenummer: 88112052.1
(22) Anmeldetag: 26.07.1988
(51) Int. Cl.: H04M 3/42, H04M 3/48, H04M 3/20, H04Q 3/00

(54) **Verfahren für eine programmgesteuerte Fernsprechvermittlungsanlage, bei der von einer Teilnehmerstelle den Aufbau einer Sprechverbindung betreffende Leistungsmerkmale einleitbar sind**
Method for a programme-controlled telephone exchange by which service features concerning the realisation of a speech connection are introduced from a subscriber terminal
Méthode pour un central téléphonique commandé par programme dans lequel des caractéristiques de service concernant la réalisation d'une connexion de parole sont introduites à partir d'un poste d'abonné

(30) Priorität: 25.08.1987 DE 3728345
(43) Veröffentlichungstag der Anmeldung: 01.03.1989
(73) Patentinhaber: SIEMENS AKTIENGESELLSCHAFT, 80333 München (DE)
(72) Erfinder: Van Landeghem, Marc, B-9800 Deinze (BE)

(56) Entgegenhaltungen:
- EP-A- 0 173 264
- DE-A- 3 310 608
- GB-A- 2 082 421

## Beschreibung

Die Erfindung betrifft ein Verfahren für eine programmgesteuerte Fernsprechvermitttlungsanlage gemäß Oberbegriff des Anspruchs 1.

In heutigen Fernsprechvermittlungsanlagen kann ein Fernsprechteilnehmer von einer Teilnehmerstelle aus verschiedene Leistungsmerkmale in Anspruch nehmen. Derartige Leistungsmerkmale sind z.B. Wahlwiederholung, Kurzwahl, Rufumleitung, Aufschalten oder beispielsweise Konferenzverbindungen. Derartige Leistungsmerkmale können entweder bei Belegung der Vermittlungseinrichtung oder aber während einer bereits bestehenden Gesprächsverbindung eingeleitet werden. Es ist bekannt, Leistungsmerkmale durch die Wahl bestimmter Ziffern bzw. Ziffernfolgen einzuleiten. Dies ist für den Benutzer umständlich und es besteht die Gefahr von falschen Eingaben. Eine andere Möglichkeit Leistungsmerkmale zu aktivieren, besteht in der Betätigung sogenannter Funktionstasten. In jedem Falle werden von dem einzelnen Benutzer bestimmte Entscheidungen für eine bestimmte Möglichkeit verlangt. So sind z.B. im Besetztfall der gerufenen Teilnehmerstelle für den anrufenden Teilnehmer mehrere Leistungsmerkmale einleitbar, z.B. automatischer Rückruf, Anklopfen und Aufschalten, oder Wahlwiederholung bzw. in modernsten Anlagen ein Nachrichtenaustausch über "Sprach-Postfächer".

Entscheidet sich der Teilnehmer für eines dieser Leistungsmerkmale, so hat er ohne eine erneute z.T. umfangreiche Einleitung eines neuen Leistungsmerkmals keine Möglichkeit das alte Leistungsmerkmal zu ändern. Hinzu kommt, daß es von vielen Teilnehmern als lästig empfunden wird beim Aufbau einer Gesprächsverbindung, der in der Regel parallel zu einer anderen Tätigkeit verläuft, zusätzliche Ziffern einzuwählen oder bestimmte Funktionstasten zu betätigen.

Aus der EP-A-0173 264 ist ein Verfahren zur Aktivierung verschiedener Leistungsmerkmale von einer Teilnehmerstelle einer programmgesteuerten Vermittlungsanlage bekannt. Dieses bekannte Verfahren ermöglicht unter anderem, daß im Besetztfall der gerufenen Teilnehmerstelle nach Betätigen einer Signaltaste bis zum Zustandekommen der gewünschten Verbindung jeweils nach vorgegebenen Zeitabständen prioritätshöhre Leistungsmerkmale automatisch eingeleitet werden.

Aufgabe der vorliegenden Erfindung ist es, für den rufenden Teilnehmer das Einleiten von Leistungsmerkmalen im Besetztfall zu vereinfachen, wenn der rufende Teilnehmer innerhalb eines zeitlich begrenzten Zeitraums unbedingt eine Verbindung mit dem gerufenen Teilnehmer wünscht.

Diese Aufgabe wird durch die Erfindung gemäß Anspruch 1 gelöst.

Trifft ein Teilnehmer bei dem erfindungsgemäßen Verfahren auf eine besetzte Teilnehmerstelle, so werden von ihm keine weiteren Tätigkeiten verlangt, sondern nach jeweils bestimmten Zeiträumen werden Leistungsmerkmale mit jeweils höherer Priorität automatisch wirksam geschaltet, so daß es in jedem Falle zu einer Verbindung zwischen der rufenden und der gerufenen Teilnehmerstelle kommt. Dabei hat der Teilnehmer der rufenden Teilnehmerstelle jederzeit die Möglichkeit auf das endgültige Zustandekommen der Gesprächsverbindung zu verzichten.

Glichzeitig wird im Besetztfall der gerufenen Teilnehmerstelle mit dem Anschalten des Besetzttons automatisch ein Rückrufauftrag eingetragen, der innerhalb eines ersten vorgegebenen Zeitraums nach freiwerden der gerufenen Teilnehmerstelle ausgeführt wird.

Hierbei erfolgt ohne Tätigwerden des rufenden Teilnehmers im Besetztfall der gerufenen Teilnehmerstelle automatisch der Eintrag eines Rückrufauftrags. Dadurch wird verhindert, daß der gerufene Teilnehmer das Gespräch beendet und sich von der Teilnehmerstelle entfernt bevor vom rufenden Teilnehmer ein Rückrufauftrag eingegeben worden ist und so eine Gesprächsverbindung zwischen den beiden Teilnehmern nicht zustande kommen kann. Der gerufene Teilnehmer wird also sofort nach dem Ende seines Gesprächs darauf aufmerksam gemacht, daß ein Gesprächswunsch vorliegt, so daß er die Teilnehmerstelle nicht verläßt.

Eine zweckmäßige Ausgestaltung des erfindungsgemäßen Verfahrens ist dadurch gekennzeichnet, daß innerhalb eines zweiten sich an den ersten anschließenden vorgegebenen Zeitraums ein Rückrufauftrag automatisch durch Auflegen des Hörers an der rufenden Teilnehmerstelle eingetragen wird. Diese Möglichkeit wird der rufende Teilnehmer wählen, wenn er dem gewünschten Gespräch keine so hohe Priorität einräumt, daß er es zu einem Anklopfen beziehungsweise Aufschalten kommen lassen möchte.

Eine weitere Ausgestaltung des Verfahrens gemäß der vorliegenden Erfindung ist dadurch gekennzeichnet, daß bei Fehlen eines Rückrufautrags während eines dritten sich an den zweiten anschließenden vorgegebenen Zeitraums automatisch ein Anklopfton an die gerufene Teilnehmerstelle gesendet wird, und daß bei Nichtzustandekommen der Gesprächsverbindung nach Ablauf des dritten vorgegebenen Zeitraums automatisch ein Aufschalten der rufenden Teilnehmerstelle erfolgt. Dadurch ist gewährleistet, daß für den Fall, daß sich der Teilnehmer nicht für einen normalen Rückruf entscheidet, auf jeden Fall automatisch eine Gesprächsverbindung zwischen der rufenden und der besetzt gerufenen Teilnehmerstelle zustandekommt.

Die Erfindung wird nachfolgend anhand eines in der Zeichnung dargestellten Ausführungsbeispiels näher erläutert.

Es zeigen
- FIG 1: einen beispielsweisen prinzipiellen Aufbau einer programmgesteuerten Fernsprechvermittlungsanlage, bei der das erfindungsgemäße Verfahren durchführbar ist, und
- FIG 2: den zeitlichen Ablauf der Einleitung der einzelnen Leistungsmerkmale einschließlich von jeweils anliegenden Hörtöne.

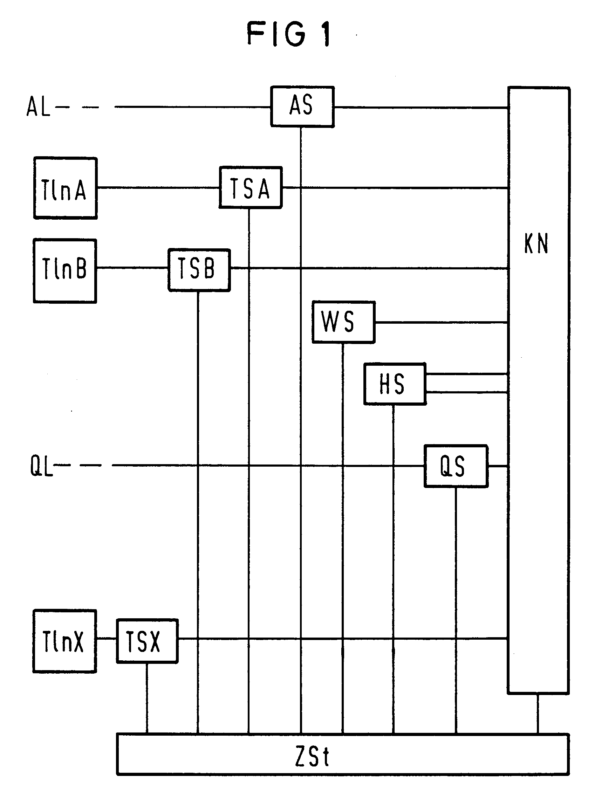

Das Blockschaltbild in Figur 1 zeigt die wesentlichen Baugruppen einer Fernsprechvermittlungsanlage. Die vermittlungstechnischen Steuerungsabläufe werden im wesentlichen durch die Zentralsteuerung ZSt, zu der auch umfangreiche Speicheranordnungen gehören, gesteuert. Die zentrale Steuerung ZSt ist mit einem Koppelnetzwerk KN sowie mit mehrern Verbindungssätzen verbunden. Im vorliegenden Fall wird davon ausgegangen, daß es sich bei der dargestellten Fernsprechvermittlungsanlage um eine Nebenstellenanlage handelt. In diesem Zusammenhang ist allerdings festzustellen, daß das erfindungsgemäße Verfahren keineswegs nur auf private Nebenstellenanlagen beschränkt ist. Von den vielen möglichen Verbindungssätzen ist ein Amtssatz AS, über den die Verbindung zu öffentlichen Fernsprechvermittlungsanlagen über Anschlußleitungen Al verläuft, ein Haussatz HS, über den die internen Verbindungen geschaltet sind, ein Aufnahmesatz WS zur Aufnahme der im Mehrfrequenzverfahren gesendeten Wahlinformationen und ein Querleitungssatz QS, über den die Verbindung zu parallelen privaten Nebenstellenanlagen über Querverbindungsleitungen Ql abgewickelt wird, gezeigt. An die dargestellte Fernsprechvermittlungsanlage sind z.B. die internen Teilnehmer TlnA bis TlnX jeweils über die Teilnehmersätze TSA bis TSX angeschlossen. Diese Teilnehmersätze enthalten in hier nicht dargestellter Weise Indikationsstellen, welche Zustandsänderungen auf den jeweiligen Anschlußleitungen erkennen. Die einzelnen Informationen der Teilnehmer- bzw. Verbindungssätze werden von der zentralen Steuerung ZSt aufgenommen. Von dieser werden dann Einstellbefehle an die einzelnen Sätze übermittelt. Dies trifft in gleicher Weise sowohl für die Teilnehmer- als auch für die Verbindungssätze zu. Der jeweilige Verbindungs- bzw. Teilnehmersatz wird dabei mittels einer Adresseninformation gekennzeichnet. Da davon ausgegangen wird, daß dem Fachmann der Aufbau einer Fernsprechvermittlungsanlage bekannt ist, soll hier auf Einzelheiten der dargestellten Fernsprechvermittlungsanlage nicht eingegangen werden.

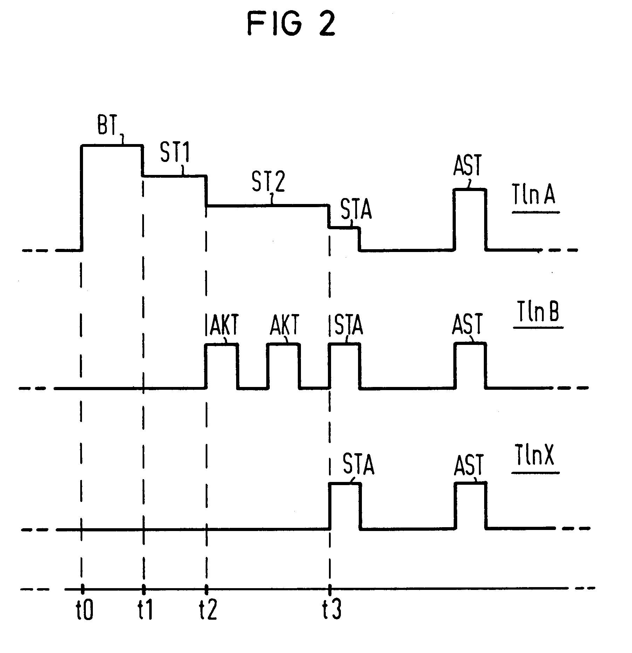

Bei den in Figur 2 dargestellten Diagrammen wird davon ausgegangen, daß die Teilnehmerstelle TlnA die rufende Teilnehmerstelle ist, während die Teilnehmerstelle TlnB die gerufene und besetzt vorgefundene Teilnehmerstelle ist, die sich wiederum mit der Teilnehmerstelle TlnX im Gesprächszustand befindet.

Zum Zeitpunkt t0 wird die Teilnehmerstation B von der Teilnehmerstation A besetzt vorgefunden. Daraufhin erhält die Teilnehmerstation A bis zum Zeitpunkt t1 einen Besetztton. Während dieser Zeit hat der rufende Teilnehmer die Möglichkeit auf eine Verbindung mit der Teilnehmerstelle B ganz zu verzichten. Dies erreicht er durch Auflegen des Handapperates bzw. bei einer Lauthör- oder Freisprechstation durch Betätigen einer entsprechenden Taste. Erfindungsgemäß wird zum Zeitpunkt t0 automatisch ein Rückrufauftrag eingetragen, welcher nach Freiwerden der gerufenen Teilnehmerstelle bis zum Zeitpunkt t1 ausgeführt wird. Dadurch wird verhindert, daß sich der gerufene Teilnehmer nach Beendigung seines Gesprächs von der Teilnehmerstelle entfernt bevor von der rufenden Teilnehmerstelle ein Rückrufauftrag eingegegeben worden ist. Dieser automatisch eingetragene Rückruf kommt nicht zustande, wenn der rufende Teilnehmer während des ersten Zeitraums - von t0 bis t1 - den Hörer auflegt, bzw. eine entsprechende Taste betätigt. Nach dem Zeitpunkt t1 bis zum Zeitpunkt t2 erhält der rufende Teilnehmer einen Signalton ST1 erster Art, welcher ihm anzeigt, daß während dieses Zeitraums durch Auflegen des Handapparates automatisch ein Rückrufauftrag eingeschrieben wird. Ist die gewünschte Teilnehmerstelle B frei, erhält die Teilnehmerstelle A, die den Rückrufauftrag durch Auflegen des Hörers automatisch eingetragen hat, einen Rückruf. Nach der Entgegennahme wird die gewünschte Teilnehmerstelle B gerufen.

Wird der rufende Teilnehmer bis zum Zeitpunkt t2 nicht tätig, so wird automatisch ab diesem Zeitpunkt durch einen Anklopfton AKT die Teilnehmerstation B auf einen dringenden Anruf aufmerksam gemacht. Beendet der gewünschte Teilnehmer der Teilnehmerstelle B währenddessen sein Gespräch, wird er automatisch gerufen. Während dieses Zeitraums hat der Teilnehmer der rufenden Teilnehmerstelle die Möglichkeit auf einen endgültigen Verbindungsaufbau d.h. auf das Leistungsmerkmal "Anklopfen" zu verzichten, auch in diesem Falle wieder durch Auflegen des Handapparates.

Wird der Teilnehmer der rufenden Teilnehmerstelle A bis zum Zeitpunkt t3 nach Besetztfinden der Teilnehmerstelle B nicht tätig, so wird zum Zeitpunkt t3 die Teilnehmerstellte A auf die Verbindung zwischen der Teilnehmerstelle B und der Teilnehmerstelle X aufgeschaltet. Beim Aufschalten wird ein Signalton STA gesendet und alle drei Teilnehmerstellen zu einer Konferenz zusammengeschaltet. Während der Aufschalteverbindung erfolgt in bestimmten Zeitabständen als Aufmerksamkeitszeichen ein Aufschalteton AST. In diesem Zusammenhang ist zu erwähnen, daß das Aufschalten bei aufschaltegeschützten Nebenstellen und bei Terminals mit Datenschutz nicht möglich ist, und bei anderen Teilnehmerstellen, die einen derartigen Schutz nicht besitzen auch nur dann durchgeführt werden kann, wenn die rufende Teilnehmerstelle eine entsprechende Berechtigung besitzt.

## Patentansprüche

1. Verfahren für eine programmgesteuerte Fernsprechvermittlungsanlage mit einer alle Vermittlungsfunktionen durchführenden Zentralsteuerung, die Zugriff zu Speicheranordnungen hat, in denen alle zur Durchführung der Vermittlungsfunktionen notwendigen Informationen abgespeichert sind, wobei von einer Teilnehmerstelle jeweils bestimmte den Aufbau einer Sprechverbindung betreffende Leistungsmerkmale einleitbar sind, und daß im Besetztfall der gerufenen Teilnehmerstelle (T1nB) bis zum Zustandekommen der gewünschten Verbindung jeweils nach vorgegebenen Zeitabständen prioritätshöhere Leistungsmerkmale (z.B. Rückruf im Besetztfall, Anklopfen, Aufschalten) automatisch nacheinander eingeleitet werden, und wobei an der rufenden Teilnehmerstelle das jeweils automatisch einleitbare Leistungsmerkmal akustisch und/oder optisch signalisiert wird,
**dadurch gekennzeichnet**,
daß insbesondere das erste prioritätshöhere Leistungsmerkmal (Rückruf) automatisch eingeleitet wird, und
daß im Besetztfall der gerufenen Teilnehmerstelle mit dem Anschalten des Besetzttons automatisch ein Rückrufauftrag eingetragen wird, der innerhalb eines ersten vorgegebenen Zeitraums nach Freiwerden der gerufenen Teilnehmerstelle ausgeführt wird.

2. Verfahren nach Anspruch 1,
**dadurch gekennzeichnet,**
daß innerhalb eines zweiten sich an den ersten anschließenden vorgegebenen Zeitraums ein Rückrufauftrag automatisch durch Auflegen des Hörers an der rufenden Teilnehmerstelle eingetragen wird.

3. Verfahren nach Anspruch 1 und 2,
**dadurch gekennzeichnet,**
daß bei Fehlen eines Rückrufauftrags wahrend eines dritten sich an den zweiten anschließenden vorgegebenen Zeitraums automatisch ein Anklopfton an die gerufene Teilnehmerstelle gesendet wird, und daß bei Nichtzustandekommen der Gesprächsverbindung nach Ablauf des dritten vorgegebenen Zeitraums automatisch ein Aufschalten der rufenden Teilnehmerstelle erfolgt.

## Claims

1. Method for a program-controlled telephone switching system comprising a central processor which executes all switching functions and which has access to memory arrangements in which all information items necessary for executing the switching functions are stored, in which method specific service features relating to the setting-up of a voice connection can be initiated in each case from a subscriber station, and that, when the called subscriber station (T1nB) is busy, service features with higher priority (for example call-back on meeting busy, call waiting, breaking-in) are automatically initiated in succession in each case after predetermined time intervals until the desired connection is established, and in which the service feature which can be initiated automatically in each case is signalled audibly and/or visually at the calling subscriber station, characterized in that, preferably, the first service feature with higher priority (call-back) is initiated automatically, and in that when the called subscriber station is busy, the connecting of the engaged tone automatically enters a call-back order which is executed within a first predetermined period of time after the called subscriber station has become available.

2. Method according to Claim 1, characterized in that a call-back order is automatically entered within a second predetermined period of time following the first one by replacing the receiver at the calling subscriber station.

3. Method according to Claim 1 and 2, characterized in that when a call-back order is lacking, a call-waiting tone is automatically sent to the called subscriber station during a third predetermined period of time following the second one, and in that, when the call has not been completed after the third predetermined period of time has elapsed, a breaking-in of the calling subscriber station is automatically effected.

## Revendications

1. Procédé pour une installation de commutation téléphonique commandée par programme, comportant une unité de commande centrale qui exécute toutes les fonctions de commutation et qui a accès à des dispositifs de mémoire, dans lesquels sont mémorisées toutes les informations nécessaires pour l'exécution des fonctions de commutation, et selon lequel des caractéristiques potentielles déterminées, concernant l'établissement d'une liaison téléphonique, peuvent être introduites par un poste d'abonné et selon lequel, dans le cas où le poste d'abonné appelé (T1nP) est occupé et jusqu'à l'établissement de la liaison désirée respectivement au bout d'intervalles de temps prédéterminés, des caractéristiques potentielles de priorité supérieure (par exemple rappel dans le cas d'une occupation, annonce, immixtion) sont déclenchées successivement automatiquement, et selon lequel la caractéristique potentielle pouvant être respectivement activée de façon automatique est signalée acoustiquement et/ou optiquement au poste d'abonné appelant,
caractérisé par le fait
que notamment la première caractéristique potentielle de priorité supérieure (rappel) est déclenchée automatiquement, et
qu'en cas d'occupation du poste d'abonné appelé, un ordre de rappel, qui est exécuté pendant un premier intervalle de temps prédéterminé après libération du poste d'abonné appelé, est déclenché automatiquement lors de l'application de la tonalité d'évaluation.

2. Procédé suivant la revendication 1, caractérisé par le fait qu'un ordre de rappel est introduit automatiquement, pendant un second intervalle de temps prédéterminé, qui succède au premier intervalle de temps, sous l'effet du raccrochage de l'écouteur dans le poste d'abonné appelant.

3. Procédé suivant les revendications 1 et 2, caractérisé par le fait que, dans le cas de l'absence d'un ordre de rappel, une tonalité d'annonce est envoyée au poste d'abonné appelé, pendant un troisième intervalle de temps prédéterminé qui succède au second intervalle de temps, et que dans le cas où la liaison téléphonique n'est pas établie, une immixtion du poste d'abonné appelant est exécutée automatiquement au bout de l'écoulement du troisième intervalle de temps prédétermine.
